# EUROPEAN PATENT SPECIFICATION

(11) **EP 3 804 518 B1**
(45) Date of publication and mention of the grant of the patent: **27.07.2022**
(21) Application number: 19202689.6
(22) Date of filing: 11.10.2019
(51) Int. Cl.: A01M 21/04

(54) **METHOD AND SYSTEM FOR SELECTIVE, TO FLOWER SET ADAPTED, SPRAYING OF ORCHARDS**
VERFAHREN UND SYSTEM ZUM SELEKTIVEN, AN DEN BLÜTENSTAND ANGEPASSTEN SPRITZEN VON OBSTGÄRTEN
PROCÉDÉ ET SYSTÈME DE PULVÉRISATION DANS DES VERGERS SÉLECTIVE ET ADAPTÉE À DES ENSEMBLES DE FLEURS

(43) Date of publication of application: 14.04.2021
(73) Proprietor: Kmetijski Institut Slovenije, 1000 Ljubljana (SI); Univerza v Ljubljani, Fakulteta za strojnistvo, 1000 Ljubijana (SI)
(72) Inventor: STOPAR, Matej, 1000 Ljubljana (SI); HOCEVAR, Marko, 1236 Trzin (SI)
(74) Representative: Jersan, Tatjana

(56) References cited:
- WO-A1-02/091823
- CA-A1- 3 060 517
- US-A1- 2017 359 943
- US-A1- 2018 075 596

## Description

### Field of invention

The present invention relates to the field of protection of permanent orchards using tractor sprayers. The novelty of the invention is the introduction of selective application of plant protection products to fruit trees in a manner that is adapted to an individual physiological/bearing state of a predetermined area of tree canopies. The predetermined area of tree canopies is an area that a camera captures from a side as it travels along the spacing along straight rows of fruit trees, the area being defined to encompass the canopy of each individual tree, but may be defined in different ways, e.g. that one area comprises a strip of a certain width throughout the height of the canopy, which may be narrower or wider than the canopy of a single tree.

### Problem definition, state of the art

Alternate bearing is one of the main problems of fruit production in intensive orchards. It is manifested as irregular flowering and, consequently, irregular crop load on individual trees within the rows in an orchard (Monselise and Goldschmidt, 1982). Annual variation in flower set abundancy of individual trees in an orchard is a common occurrence, which can cause more than 100% fluctuation in the amount of crop among years (Bukovac et al. 2010). In a given year, an average of one third of fruit trees in apple, pear or plum orchards produce low yield or no yield at all (Manfrini et al. 2009). Notwithstanding the fact of variable bearing or irregular crop load of the trees in the orchard, in practice, a technological measure of chemical thinning of the fruit is applied uniformly for the entire row in the orchard, for all trees equally, without taking into account individual final fruit set of each area or tree. Since the chemical thinning measure is performed using a tractor sprayer for all trees uniformly, this means that the thinning agent is also applied to less loaded trees which should actually be avoided, as this has led to the unwanted thinning of fruitlets of poorly bearing trees. (Stopar, 2010). A selective approach to dealing with thinning or application of other plant bioregulators would be required to meet the individual needs of trees in intensive orchards. A selective application adapted to the individual physiological status of an area or a tree, that is its fruit load, would also be appropriate for a measure of leaf fertilization and perhaps also for individual measures of fruit plant protection.

Currently used orchard sprayers do not address an individual area or a tree according to their individual bearing status. Classic, air-supported tractor sprayers are mostly used worldwide; they are used for spraying in intensive orchards regardless of the actual shape and size of the canopy and regardless of other needs of the trees in an orchard row. In recent years, so-called smart sprayers have appeared on the market. They are equipped with ultrasonic and optical detectors to detect presence or absence of canopies in a row of an orchard and are able to deactivate spray nozzles in the absence of a tree canopy or in the case an empty space is detected in a fruit row. The basic concept of said smart sprayers is based on the detection of trees as a green wall in a row of the orchard, so these sprayers are able to omit the application of agents in the case of a missing tree, at the end of a row or in the case of leafless trees (Giles et al. 1989; Llorens et al. 2010). The patented intelligent sprayer solutions currently in use are based solely on ultrasonic and optical sensors for detecting the presence or absence of canopies in a row of fruit and not on the detection of the physiological bearing status of a particular area or tree. In this regard, the following patents have been issued: CN104082268 (A), CN105707044 (A), CN203424190 (U), CN204393166 (U), CN203692270 (U), CN205624078 (U), GB2521343 (A), CN203120803 (U), CN103120150 (A), CN203457694 (U)

### INDICATION OF PATENTS

| **Cited patent/ Number** | **Filing date** | **Publication date** | **Inventor/ applicant** | **Title of invention/patent** |
|---|---|---|---|---|
| CN104082268 (A) | 2014-07-08 | 2014-10-08 | Zhai Changyuan s sod. | Self-adaptive orchard sprayer |
| CN105707044 (A) | 2016-03-16 | 2016-06-29 | Zhang Xiaohui s sod. | Automatic targeting air-assisted sprayer for orchard |
| CN203424190 (U) | 2013-06-14 | 2014-02-12 | Chen Jun s sod. | Orchard intelligent pesticide spraying machine based on tree shape reconstruction |
| CN204393166 (U) | 2015-01-19 | 2015-06-17 | Ding Changping s sod. | Self-propelled orchard toward-target sprayer |
| CN203692270 (U) | 2013-11-05 | 2014-07-09 | Xu Linyun s sod. | Self-walking type orchard automatic targeting sprayer |
| CN205624078 (U) | 2016-04-26 | 2016-10-12 | Zhang Meina s sod. | Orchard is to target control system that sprays |
| GB2521343 (A) | 2013-10-23 | 2015-06-24 | Kneen Andrew s sod. | Agricultural sprayer |
| CN203120803 (U) | 2013-03-14 | 2013-08-14 | Mao Anyuan s sod. | Multifunctional variable sprayer spraying control device |
| CN103120150 (A) | 2013-01-09 | 2013-05-29 | Ding Weimin s sod. | Self-propelled orchard targeted air-conveying sprayer |
| CN203457694 (U) | 2013-09-15 | 2014-03-05 | Zhang Fugui s sod. | Variable spraying control device based on DSP (digital signal processor) |

In document WO 02/091823 a method and system for volume-specific treatment of ground and plants is disclosed, wherein a monochromatic laser scanner is used to detect geometrical properties of trees in orchard. Based on tree geometric properties the spraying amount of pesticides and fertilizers is selected.

A new chapter in terms of a selective approach to spraying was opened by Van den Zande et al. (2007) when he described a sensor for identifying the disease state of foliage of agricultural plants. Oberti et al. (2016) presented a robotic system with automatic detection and selective spot spraying of grapevines according to the incidence of the disease state in the canopy. The selective spraying of this prototype spray robot refers to the incidence of a disease in the canopy of the grapevine, not to the physiological state (e.g. crop load) of the grapevine itself.

Current technological solutions to orchard spraying do not take into account trees according to their internal physiological (bearing) status. Thus, the trees in the orchards are not selectively sprayed according to their bearing status or potential. Unlike intelligent sprayers that apply spraying agents depending on the presence or absence of a green wall in a row in the orchard, the solution according to the present invention allows a selective application of spraying agents depending on the flower set abundancy (and related subsequent final fruit set abundancy) of an individual area or tree in the row. The present invention relates to a method and system for the intelligent-selective application of chemical spray agents to an individual area or tree in an orchard, depending on the physiological status of the area or tree, more specifically, depending on the load of a particular area of the tree canopy or individual canopy with flowers and subsequently with fruits.

### INDICATION OF NON-PATENT LITERATURE

Bukovac, M. J., Sabbatini, P., & Zucconi F. (2010). A long-term study on native variation of flowering and fruiting in spur-type 'Delicious' apple. HortScience, 45(1), 22-29.

Dennis, F. G. (2000). The history of fruit thinning. Plant Growth Regulation, 31, 1-16.

Giles, D. K., Delwiche M. J., & Dodd, R. B. (1989). Sprayer control by sensing orchard crop characteristics: Orchard architecture and spray liquid savings. Journal of Agricultural Engineering Research, 43, 271-289.

Llorens, J., Gil, E., Llop, J., & Escola, A. (2010). Variable rate dosing in precision viticulture: Use of electronic devices to improve application efficiency. Crop Protection, 29, 239-248.

Manfrini, L., Taylor, J. A., & Grappadelli, L. C. (2009). Spatial analysis of the effect of fruit thinning on apple crop load. European Journal of Horticultural Science, 74(2), 54-60.

Monselise, S. P., & Goldschmidt, E. E. (1982). Alternate bearing in fruit trees. Horticultural Review, 4, 128-173.

Oberti, R., Marchi, M., Tirelli, P., Calcante, A., Iriti, M., Tona, E., Hočevar, M., Baur, J., Pfaff, J., Schutz, C., Ulbrich, H. (2016). Selective spraying of grapevines for disease control using a modular agricultural robot. Biosystems engineering, 146, 203-215.

Stopar, Matej. (2010) Fruit set and return bloom of light, medium and high flowering apple trees after BA applications. In: Proceedings of the XIth International Symposium on Plant Bioregulators in Fruit Production, Bologna, Italy, September 20-23, 2009, (Acta horticulturae, 884). Leuven: International Society for Horticultural Science, 351-356.

Van de Zande, J.C., Wenneker, M., Meuleman, J., Achten, V., Balsari, P. (2007). Development of a crop health sensors to minimize spray application in apple. SuProFruzit 2007. 9th workshop on spray application techniques in fruit growing, Alnarp (Sweden), 13-15.

### Description of the invention

According to the invention, said problem is solved by a method and system for target-selective tractor spraying for permanent orchards, characterized in that it allows selective application of spraying agents to individual areas or trees in an orchard ('site-specific') depending on the flower set abundancy and subsequently the associated fruit load of trees. In this way, a differentiated, tree-bearing adjusted practice of applying spraying agents is provided, enabling optimal yields in intensive apple, pear and prune orchards in terms of both quantity and quality.

The agents applied by spraying are, for example, fruit thinners, other plant bioregulators such as growth inhibitors, cosmetic agents or foliar fertilizers. Conditionally, selective application of plant protection agents can also be performed.

In the following, the phrase "the predetermined area of tree canopies" or the "area" refers to the area that is captured by a camera of a digital visualisation device from a side as it travels along a spacing along straight rows of fruit trees, the area being defined to encompass the canopy of each individual tree, but may be defined in different ways, e.g. that one area comprises a strip of a certain width throughout the height of the canopy, which may be narrower or wider than the canopy of a single tree.

The method and system are described hereinbelow, the system of the invention being shown in the figure.

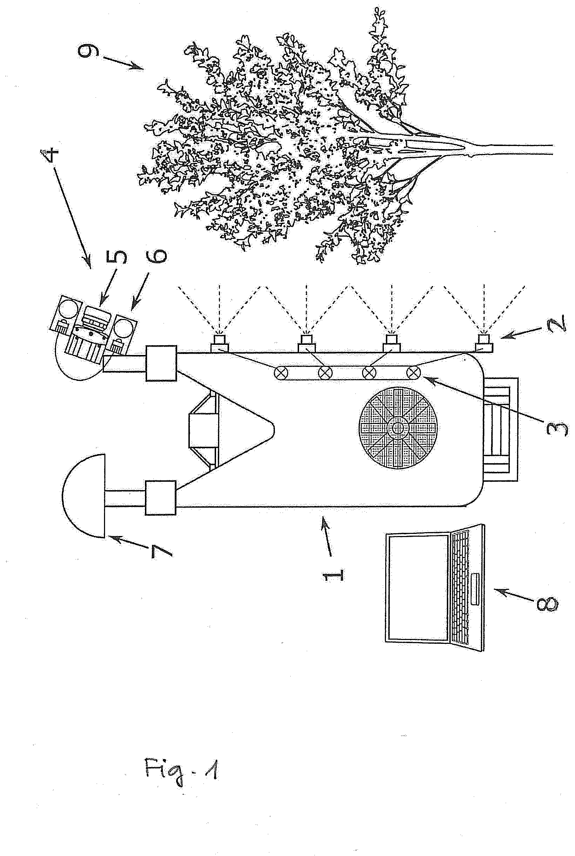

Figure 1 shows a system for selective spraying according to the invention.

Advanced precision farming methods have been used to develop the method and system for selective spraying. During a flowering period, digital images of fruit trees in a row are captured using an industrial camera. The identification system uses a three-dimensional RGB colour space to evaluate a flower set using an industrial camera attached to a tractor. When a tractor drives along a row in an orchard, a computer processing unit combines the image of an individual area or tree obtained by an industrial camera with its location obtained from a global (GPS) or local positioning system. The snapshots/images from the industrial camera are translated by an algorithm into an estimate of flower set abundancy or into a number of inflorescences for each area or tree in the orchard. The areas or trees with a flowering estimation lying below the recommended level of the flower set, pinpointed in the orchard using a precise positioning system, are marked in the computerized processing unit as 'non-sprayed areas or trees'. As such, they are excluded from the spraying agent application programme in the event of actual spraying of the orchard or are sprayed according to the actual needs of each spraying programme throughout the year. Operationally, the tractor sprayer automatically closes solenoid valves on spray nozzles as they approach the 'non-sprayed area or tree' and opens them after having passed that area or tree.

The method for selectively spraying fruit trees, adapted to the bearing state of fruit trees in an orchard, when a sprayer passes through the orchard includes the following stages:
A) electronically capturing an image for each predetermined tree canopy area during flowering by a digital visualization device, wherein a digital camera, using appropriate electronics, projects the image of the area onto a light-sensitive camera sensor to determine the flower set abundancy in an individual area and simultaneously determine the exact geographical location of each area using a device for determining the precise geographical location of the sprayer;
B) determining the number of inflorescences in each individual area and categorizing each area according to the number of inflorescences into one of the predetermined quantitative classes of flower set abundancy with a software module for image data processing, and storing the class data of each area together with the associated geographical location in a database in a computer processing unit;
C) selective spraying of fruit trees in the orchard depending on the position in the orchard, wherein the computer processing unit, based on the data on the flower set abundancy of each area together with the associated geographical location stored in the database, depending on the geographical location of the sprayer in the orchard and depending on the selected spraying program, uses a software to make decisions and actuates the nozzles controlled by solenoid valves to dispense the amount of the spraying agent to be sprayed on a single canopy area at a specific geographical location.

The determination of the number of inflorescences in each individual area and the categorization of each area according to the number of inflorescences into one of the predetermined quantitative classes of flower set abundancy is carried out in a software module for image data processing using a segmentation and classification algorithm or another appropriate image processing algorithm.

Stages A and B are performed during the first passage of the selective sprayer through the orchard, and stage C during the second and all subsequent passages of the selective sprayer through the orchard.

A system for selective spraying adapted to the bearing status of fruit trees in an orchard includes a tractor provided with a conventional tractor-mounted air-assisted orchard sprayer 1 that includes spray nozzles 2 controlled by solenoid valves 3 and other standard elements required for the operation of the sprayer such as a fan, a pump, a spraying agent tank with a flush vessel and a mixing pipe, the system additionally including:
- a digital visualization device 4 for capturing an image in a predetermined area 9 of tree canopies in a flowering period;
- a device 7 for determining the precise geographical location of the sprayer 1 for respective determination of the location of the sprayer 1 in a row in the orchard;
- a software module for image data processing to determine the abundancy of inflorescences that, for each captured image of the area 9, depending on the associated geographical location of the area 9, determines the number of inflorescences in each individual area 9 and categorizes each area 9 into one of the predefined classes of flower set abundancy depending on the number of inflorescences, and
- a computer processing unit 8 including at least inputs for communication with the digital visualization device 4 and the device 7 for determining the precise geographical location, a memory, a database, a decision-making software, and an output part for communicating with the spray nozzles 2, wherein the computer processing unit 8, based on the data on the flower set abundancy class of each area together with the associated geographical location stored in the database, depending on the geographical location of the sprayer 1 in the orchard and depending on the selected spraying programme, uses the decision-making software to actuate the nozzles 2 controlled by the solenoid valves 3 to dispense the amount of the spraying agent to be sprayed onto a single area 9.

The tractor provided with a conventional, axial or radial air-assisted orchard sprayer 1 is used as the basis for the selective spraying system.

The device 7 for determining the precise geographical location allows precise determination of the location of the sprayer 1. Upon the first passage of the sprayer 1 through the orchard, the device 7 for determining the precise geographical location determines the location of the sprayer 1 at the moment of the electronic capture of individual images of the area 9 and transmits it to the computer processing unit 8, and upon all subsequent passages of the sprayer 1 through the orchard, it determines the location of the sprayer 1 with respect to each area 9 in the orchard and transmits it to the computer processing unit 8 to perform selective spraying for that area 9. The device 7 for determining the precise geographical location determines the location of the sprayer 1 and transmits it to the computer processing unit 8 through a wired or wireless connection.

The accuracy of positioning is adapted to the respective size of the selected area 9. Positioning can be performed by Global Positioning Systems (GPS), for example by differential GPS, by real-time GPS kinematics, by differential GPS with real-time kinematics with a single-frequency or dual-frequency receiver,... or by local positioning systems, such as a wireless transceiver module, with radio frequency identification or other positioning methods, which enable the accuracy of the geographical location of the sprayer 1 within at least 30 cm.

The digital visualization device 4 obtains images of individual areas 9 from a digital camera 5 with electronics, which, through lenses, projects an image of the area onto a light-sensitive sensor of the camera 5.

The digital visualization device 4 is optionally equipped with an illumination unit 6 capable of continuous illumination, such as LED, fluorescent, halogen or conventional illumination.

The software module for image data processing processes the images stored in the memory of the computer processing unit 8 or the images obtained directly from the digital visualization device 4. The software module for image data processing, among other things, is capable of image enhancement, RGB, HSL colour processing, or other colour categorization of images of areas into predetermined classes of flower set abundancy, by segmentation and classification algorithms, or other relevant image processing algorithms. The software module for image data processing, using the above-mentioned algorithms with predefined parameters, is capable of counting the number of inflorescences in each individual area 9 in the orchard. The software module for image data processing counts the number of inflorescences in the area 9 for each individual area and categorizes each area 9 into a flower set abundancy class depending on the number of inflorescences. The information on the categorization of the area 9 into a class, together with the associated geographical location of the area 9, is entered into the database on the computer processing unit 8. The predetermined classes for the categorization of an individual area 9 are defined according to the flower set abundancy of an individual area 9 and are numbered from n = 1 to N, with the first class n = 1 representing the lowest number of inflorescences per area 9, the last class n = N representing the highest number inflorescences in area 9 and each intermediate class 1<n<N representing a higher number of inflorescences in the area 9 than the previous class. One possible definition of flower set abundancy classes is for example:
1 - 0 to 50 inflorescences per tree
2 - 51 to 120 inflorescences per tree
3 - more than 121 inflorescences per tree.

The software module for image data processing runs either on the computer processing unit 8 or on the digital visualization device 4. In the first case, the images from the digital visualization device 4 are directly transmitted to the memory of the computer processing unit 8. The software module for image data processing, using an appropriate algorithm, counts the number of inflorescences in the area 9 for each image for each individual area 9 from the memory and categorizes each area 9 into a flower set abundancy class depending on the number of inflorescences. The information on the categorization of the area 9 into a class is entered into the database on the computer processing unit 8 together with the associated precise geographical location of the area 9 transmitted to the computer processing unit 8 from the device 7 for determining the precise geographical location of the area 9.

When the software module runs on the digital visualization device 4, the digital visualization device 4 transmits to the computer processing unit 8 the information about the categorization of the area 9 into a class, the associated geographical location 9 is transmitted to the computer processing unit 8 from the device 7 for determining the precise geographical location of the area 9, and the computer processing unit 8 enters both pieces of information into the database, processes them or otherwise uses them.

The computer processing unit 8 is represented by a central computer capable of synchronizing and integrating all other modules and implementing the processed data from the digital sensing to an analogue control system of the solenoid valves 3 of the nozzles 2. The computer processing unit 8 enables the database to be written and read. The database provides the recording and reading of data for each individual area 9 in the orchard. The data for each individual area 9 includes the number of inflorescences, the date of measurement of the number of inflorescences, the number and method of the previous application/spraying, the precise geographical location of the area, and all other relevant information necessary to carry out the selective spraying of the sprayer 1 adapted to the physiology of the area 9.

The computer processing unit 8 includes at least inputs for communication with the digital visualization device 4 and the device 7 for determining the precise geographical location, a memory, in which the images transmitted by the digital visualization device 4 are stored, a database, a decision-making software, and an output part for communicating with the spray nozzles 2, wherein the computer processing unit 8, based on the data on the flower set abundancy class of each area together with the associated geographical location stored in the database, depending on the geographical location of the sprayer 1 in the orchard and depending on the selected spraying programme, uses the decision-making software to actuate the nozzles 2 controlled by the solenoid valves 3 to dispense the amount of the spraying agent to be sprayed onto a single area 9.

For each type of fruit tree, a pesticide or fertilizer spraying regime is prescribed and defined according to the flower set abundancy class.

The computer processing unit 8, based on the data on the class of each area 9 together with the associated geographical location stored in the database, depending on the geographical location of the sprayer 1 in the orchard and depending on the selected spraying programme, uses the decision-making software to actuate the nozzles 2 controlled by the solenoid valves 3 to dispense the amount of the spraying agent to be sprayed onto a single area 9.

The computer processing unit 8 transmits to the nozzles 2 controlled by the solenoid valves 3 the information relating to dispensing the amount of the spraying agent to be sprayed onto a single area 9. For the areas 9 categorized into class n = 1, i.e. with the lowest number of inflorescences, the use of chemical thinning of fruitlets, for instance, would result in a decreased crop yield, so these areas 9 are exempt from spraying, in fact the nozzles 2 remain closed when the sprayer 1 passes this area 9. For the areas 9 categorized into further classes, the decision-making software determines an appropriate concentration or volume of the chemical thinning agent of the fruitlets by class, i.e. by the number of inflorescences, wherein the nozzles 2 open when the sprayer 1 passes these areas 9 and the adequate amount of the agent is sprayed onto an individual area 9. The spray nozzles 2 provided with the solenoid valves 3 are configured in a way to allow adapted, variable dispensing of the spraying agent in short time intervals. In this way, each individual area 9 receives the spraying agent in a quantity specified by the decision-making software within the time interval of the passage of the selective sprayer 1 past this area 9.

The computer processing unit 8 is configured as a laptop, an industrial computer, or any other microprocessor capable of setting up and using an input-output database, the computer processing unit 8 being located on the tractor or separately and receiving and transmitting the information via a wired or wireless connection.

The problem of both alternate bearing of individual trees in an orchard and unnecessary use of plant protection agents is solved by the new method for selective spraying, by the so-called 'system for selecting spraying with a customized individual spraying programme depending on the physiological needs (degree of fruit load) of an individual area or tree.

The fundamental points of the solution brought along by the selective tractor spraying are as follows:
a) identifying the flower set abundancy using digital visualization (estimation of the flower set by an individual area or tree);
b) memorizing the estimated flower set abundancy of all individual areas or trees in the orchard and determining the exact location of each area or tree by a digital precision positioning system, forming a database and using this information for different spraying programmes during the season;
c) selective spraying in orchard rows depending on the applied spraying programme, wherein the flower set abundancy estimated by the machine vision serves as a basis for deciding whether the valve on the sprayer nozzle is to be opened/closed. Different spraying programmes (depending on the needs of the orchard throughout the year) can be assigned different flower set levels that trigger the command for opening/closing the spraying nozzle.

## Claims

1. A method for selectively spraying fruit trees, adapted to the bearing state of fruit trees in an orchard, when a sprayer passes through the orchard, wherein the method including the following stages:
A) electronically capturing an image for each predetermined tree canopy area (9) during flowering by a digital visualization device (4), wherein the digital camera (5), using electronics, projects the image of the area (9) onto a light-sensitive sensor of the camera (5) determining the flower set abundancy in an individual area (9) and simultaneously determining the exact geographical location of each area (9) using a device (7) determining the precise geographica location of the sprayer (1);
B) determining the number of inflorescences in each individual area (9) and categorizing each area (9) according to the number of inflorescences into one of the predetermined quantitative classes of flower set abundancy with a software module for image data processing using a segmentation and classification algorithm or another image processing algorithm, wherein the predetermined quantitative classes of flower set abundancy are numbered from n = 1 to N, with the first class n = 1 representing the lowest number of inflorescences per area (9), the last class n = N representing the highest number inflorescences in area (9) and each intermediate class 1<n<N representing a higher number of inflorescences in the area (9) than the previous class, and storing the class data of each area (9) together with the associated geographical location in a database in a computer processing unit (8);
C) selective spraying of fruit trees in the orchard depending on the position in the orchard, wherein the computer processing unit (8), based on the data on the flower set abundancy of each area (9) together with the associated geographical location of the area (9), stored in the database, depending on the geographical location of the sprayer (1) in the orchard and depending on the selected spraying program, uses a software to make decisions and actuates nozzles (2) controlled by solenoid valves (3) to dispense the amount of the spraying agent to be sprayed on a single canopy area (9) at a specific geographical location.

2. Method according to claim 1, wherein the predetermined area (9) of tree canopies in the flowering period is an area captured by the camera (5) of the digital visualisation device (4) from a side as the camera (5) is traveling along a spacing between straight rows of fruit trees, said area (9) comprising the canopy of an individual tree or a strip of a certain width along the entire height of the canopy, said strip being narrower or wider than the canopy of an individual tree.

3. Method according to claims 1 and 2, wherein the software module for image data processing runs on the computer processing unit (8), wherein the images from the digital visualisation device (4) are directly transmitted to the memory of the computer processing unit (8) and the software module counts the number of inflorescences in the area (9) for each image for each individual area (9) from the memory and categorizes each area (9) into a flower set abundancy class, and the information on the categorization of the area (9) into a class is entered into the database on the computer processing unit (8) together with the associated precise geographical location of the area (9) transmitted to the computer processing unit (8) from the device (7) for determining the precise geographical location of the area (9).

4. Method according to claims 1 and 2, wherein the software module for image data processing runs on the digital visualization device (4), the digital visualization device (4) transmitting to the computer processing unit (8) the information about the categorization of the area (9) into a class, the associated geographical location of the area (9) being transmitted to the computer processing unit (8) from the device (7) for determining the precise geographical location of the area (9), and the computer processing unit (8) entering both pieces of information into the database on the computer processing unit (8).

5. Method according to claims 1 to 4, wherein stages A and B are performed during the first passage of the sprayer (1) through the orchard, and stage C during the second and all subsequent passages of the sprayer (1) through the orchard.

6. A system for selective spraying adapted to the bearing status of fruit trees in an orchard, the system including a tractor provided with a conventional tractor-mounted air-assisted orchard sprayer (1) that includes spray nozzles (2) controlled by solenoid valves (3) and other standard elements required for the operation of the sprayer (1) such as a fan, a pump, a spraying agent tank with a flush vessel and a mixing pipe, and wherein the system additionally including:
- a digital visualization device (4) capturing an image of a predetermined area (9) of tree canopies in a flowering period, wherein the digital visualization device (4) includes a digital camera (5) with electronics, projecting images of the area (9) through lenses onto a light-sensitive sensor of the camera (5);
- a device (7) determining the precise geographical location of the sprayer (1) for respective determination of the location of the sprayer (1) in a row in the orchard;
- a software module for image data processing determining the abundancy of inflorescences that, for each captured image of the area (9), depending on the associated geographical location of the area (9), determines the number of inflorescences in each individual area (9) and categorizes each area (9) into one of the predefined classes of flower set abundancy depending on the predetermined quantitative number of inflorescences, wherein the predetermined quantitative classes of flower set abundancy are numbered from n = 1 to N, with the first class n = 1 representing the lowest number of inflorescences per area (9), the last class n = N representing the highest number inflorescences in area (9) and each intermediate class 1<n<N representing a higher number of inflorescences in the area (9) than the previous class, and
- a computer processing unit (8) including at least inputs for communication with the digital visualization device (4) and the device (7) determining the precise geographical location, a memory, a database, a decision-making software, and an output part for communicating with the spray nozzles (2), wherein the computer processing unit (8), based on the data on the flower set abundancy class of each area (9) together with the associated geographical location of the area (9), stored in the database, depending on the geographical location of the sprayer (1) in the orchard and depending on the selected spraying programme, uses the decision-making software to actuate the nozzles (2) controlled by the solenoid valves (3) to dispense the amount of the spraying agent to be sprayed onto a single area (9).

7. The system for selective spraying according to claim 6, wherein the digital visualization device (4) is further equipped with an illumination unit (6) capable of continuous illumination, e. g. by LED, fluorescent, halogen or conventional way.

8. The system for selective spraying according to claim 6, wherein the device (7) for determining the precise geographical location includes positioning systems, selected from a differential GPS, GPS real-time kinematics and a differential GPS with real-time kinematics with a single-frequency or dual-frequency receiver, or local positioning systems selected from a wireless transceiver module and radio frequency identification.

9. The system for selective spraying according to claim 6, wherein the software module for image data processing runs on the computer processing unit (8) or the digital visualisation device (4).

10. The system for selective spraying according to claims 6 to 9, wherein the predetermined area (9) of tree canopies in the flowering period is an area captured by the camera (5) of the digital visualisation device (4) from a side as the camera (5) is traveling along a spacing between straight rows of fruit trees, wherein said area (9) comprising the canopy of an individual tree or a strip of a certain width along the entire height of the canopy, said strip being narrower or wider than the canopy of an individual tree.

11. The system for selective spraying according to claims 6 to 10, wherein the computer processing unit (8) is located on the tractor or separately and receives and transmits the information via a wired or wireless connection.

## Patentansprüche

1. Verfahren zum selektiven Spritzen von Obstbäumen, das an den fruchttragenden Zustand von Obstbäumen in einem Obstgarten angepasst ist, wenn ein Sprühgerät den Obstgarten durchfährt, wobei das Verfahren die folgenden Schritte umfasst:
A) elektronisches Erfassen eines Bildes durch eine digitale Visualisierungseinrichtung (4) für jeden vorgegebenen Baumkronenbereich (9) während der Blütezeit, wobei die Digitalkamera (5) unter Verwendung von Elektronik das Bild des Bereichs (9) auf einen lichtempfindlichen Sensor der Kamera (5) projiziert, um die Blütenansatz-Abundanz in einem einzelnen Bereich (9) zu bestimmen und gleichzeitig die genaue geographische Lage jedes Bereichs (9) unter Verwendung einer Vorrichtung (7)zu bestimmen, die den genauen geographischen Ort des Sprühgeräts (1) bestimmt,;
B) Bestimmen der Anzahl von Infloreszenzen in jedem einzelnen Bereich (9) und Kategorisieren jedes Bereichs (9) gemäß der Anzahl von Infloreszenzen in eine der vorbestimmten quantitativen Klassen von Blütenansatz-Abundanz mit einem Softwaremodul zur Bilddatenverarbeitung unter Verwendung eines Segmentierungs- und Klassifizierungsalgorithmus oder eines anderen Bildverarbeitungsalgorithmus, wobei die vorbestimmten quantitativen Klassen von Blütenansatz-Abundanz von n = 1 bis N nummeriert sind, wobei die erste Klasse n = 1 die niedrigste Anzahl von Infloreszenzen pro Bereich (9) darstellt, die letzte Klasse n = N die höchste Anzahl von Infloreszenzen im Bereich (9) darstellt, und jede Zwischenklasse 1 < n < N eine höhere Anzahl von Infloreszenzen im Bereich (9) darstellt als die vorherige Klasse, und Speichern der Klassendaten jedes Bereichs (9) zusammen mit dem zugehörigen geografischen Standort in einer Datenbank in einer Computerverarbeitungseinheit (8);
C) positionsabhängiges selektives Spritzen von Obstbäumen im Obstgarten, wobei die Computerverarbeitungseinheit (8), basierend auf den Daten des Blütenansatz-Abundanz jedes Bereichs (9) zusammen mit dem dazugehörigen geographischen Ort des in der Datenbank hinterlegten Bereichs (9) in Abhängigkeit von der geographischen Position des Sprühgeräts (1) im Obstgarten und in Abhängigkeit von dem ausgewählten Spritzprogramm eine Software verwendet, um Entscheidungen zu treffen und Düsen (2) zu betätigen, die durch Magnetventile (3) gesteuert werden, um die Menge des Spritzmittels, die auf jeden einzelnen Baumkronenbereich (9) an einem bestimmten geografischen Ort gespritzt werden soll, abzugeben.

2. Verfahren nach Anspruch 1, wobei der vorbestimmte Bereich (9) von Baumkronen in der Blütezeit ein Bereich ist, der von der Kamera (5) der digitalen Visualisierungsvorrichtung (4) von der Seite erfasst wird, während sich die Kamera (5) entlang eines Abstands zwischen geraden Reihen der Obstbäume bewegt, wobei der Bereich (9) die Baumkrone eines einzelnen Baums oder einen Streifen mit einer bestimmten Breite entlang der gesamten Höhe der Baumkrone umfasst, wobei der Streifen schmaler oder breiter ist als die Baumkrone eines individuellen Baums.

3. Verfahren nach den Ansprüchen 1 und 2, wobei das Softwaremodul zur Bilddatenverarbeitung auf der Computerverarbeitungseinheit (8) abläuft, wobei die Bilder der digitalen Visualisierungsvorrichtung (4) direkt an den Speicher der Computerverarbeitungseinheit (8) übertragen werden und das Softwaremodul die Anzahl der Infloreszenzen in dem Bereich (9) für jedes Bild für jeden einzelnen Bereich (9) aus dem Speicher zählt und jeden Bereich (9) in eine Blütensatz-Abundanz-Klasse kategorisiert und die Informationen über die Kategorisierung des Bereichs (9) in eine Klasse, zusammen mit dem zugehörigen genauen geographischen Ort, des, von der Vorrichtung (7) an die Computerverarbeitungseinheit (8) übermittelten Bereichs (9) zur Bestimmung des genauen geographischen Orts des Bereichs (9) in die Datenbank eingegeben werden.

4. Verfahren nach den Ansprüchen 1 und 2, wobei das Softwaremodul zur Bilddatenverarbeitung auf der digitalen Visualisierungsvorrichtung (4) abläuft, wobei die digitale Visualisierungsvorrichtung (4) die Information über die Kategorisierung des Bereichs (9) in eine Klasse an die Computerverarbeitungseinheit (8) überträgt, wobei der zugehörige geographische Ort des Bereichs (9) von der Vorrichtung (7) zur Bestimmung des genauen geographischen Orts des Bereichs (9) an die Computerverarbeitungseinheit (8) übertragen wird und die Computerverarbeitungseinheit (8) beide Informationen in die Datenbank auf der Computerverarbeitungseinheit (8) eingibt.

5. Verfahren nach den Ansprüchen 1 bis 4, wobei die Stufen A und B während des ersten Durchlaufens des Sprühgerätes (1) durch den Fruchtgarten und die Stufe C während des zweiten und aller nachfolgenden Durchläufe des Sprühgeräts (1) durch den Obstgarten durchgeführt werden.

6. System zum selektiven Spritzen, das an den fruchttragenden Zustand von Obstbäumen in einem Obstgarten angepasst ist, wobei das System einen Traktor umfasst, der mit einem konventionellen, an einen Traktor montierten Druckluftsprühgerät (1) versehen ist, Sprühdüsen (2) umfasst, die durch Magnetventile (3) und andere Standardelemente gesteuert werden, die für den Betrieb des Sprühgeräts (1) erforderlich sind; wie ein Gebläse, eine Pumpe, ein Spritzmitteltank mit Spülbehälter und einem Mischrohr, und wobei das System zusätzlich umfasst:
- eine digitale Visualisierungsvorrichtung (4), die ein Bild eines vorbestimmten Bereichs (9) von Baumkronen in der Blütezeit erfasst, wobei die digitale Visualisierungsvorrichtung (4) eine Digitalkamera (5) mit Elektronik umfasst, die Bilder des Bereichs (9) durch Linsen auf einen lichtempfindlichen Sensor der Kamera (5) projiziert;
- eine Vorrichtung (7) zum Bestimmen des genauen geographischen Orts des Sprühgeräts (1) zur jeweiligen Ortsbestimmung des Sprühgeräts (1) in einer Reihe im Obstgarten;
- ein Softwaremodul zur Bilddatenverarbeitung, das die Abundanz von Infloreszenzen bestimmt, das für jedes erfasste Bild des Bereichs (9) in Abhängigkeit des dazugehörigen geographischen Orts des Bereichs (9) die Anzahl der Infloreszenzen in jedem einzelnen Bereich (9) bestimmt und jeden Bereich (9) in eine der vordefinierten Klassen der Blütenansatz-Abundanz in Abhängigkeit der vorgegebenen quantitativen Anzahl von Infloreszenzen kategorisiert, wobei die vorbestimmten quantitativen Klassen von Blütenansatz-Abundanz von n = 1 bis N nummeriert sind, wobei die erste Klasse n = 1 die niedrigste Anzahl von Infloreszenzen pro Bereich (9) darstellt, die letzte Klasse n = N die höchste Anzahl von Infloreszenzen im Bereich (9) darstellt, und jede Zwischenklasse 1 < n < N eine höhere Anzahl von Infloreszenzen im Bereich (9) darstellt als die vorherige Klasse, und
- eine Computerverarbeitungseinheit (8), die mindestens Eingänge zur Kommunikation mit der digitalen Visualisierungsvorrichtung (4) und die Vorrichtung (7) aufweist, und die den genauen geografischen Ort bestimmt, einen Speicher, eine Datenbank, eine Entscheidungssoftware und einen Ausgabeteil zum Kommunizieren mit den Sprühdüsen (2) umfasst, wobei die Computerverarbeitungseinheit (8), basierend auf den Daten des Blütenansatz-Abundanz-Klasse von jedem Bereich (9) zusammen mit dem zugehörigen geographischen Ort des in der Datenbank hinterlegten Bereichs (9) in Abhängigkeit von der geographischen Position des Sprühgeräts (1) im Obstgarten und in Abhängigkeit von dem ausgewählten Spritzprogramm eine Software verwendet, um Entscheidungen zu treffen und Düsen (2) zu betätigen, die durch Magnetventile (3) gesteuert werden, um die Menge des Spritzmittels, die an einem bestimmten Bereich (9) gespritzt werden soll, abzugeben.

7. System zum selektiven Spritzen nach Anspruch 6, wobei die digitale Visualisierungsvorrichtung (4) außerdem mit einer Beleuchtungseinheit (6) ausgestattet ist, die eine kontinuierlichen Beleuchtung ermöglicht, z. B. durch LED, Fluoreszenz, Halogen oder auf herkömmliche Weise.

8. System zum selektiven Spritzen nach Anspruch 6, wobei die Vorrichtung (7) zum Bestimmen des genauen geografischen Orts Positionierungssysteme umfasst, die entweder aus einer differentiellen GPS, GPS-Echtzeitkinematik und einem Differential-GPS mit Echtzeitkinematik mit einem Einfrequenz- oder Dualfrequenzempfänger oder lokalen Positionierungssystemen, aus einem drahtlosen Sende-/Empfangsmodul und einer Radiofrequenzidentifikation bestehen.

9. System zum selektiven Spritzen nach Anspruch 6, wobei das Softwaremodul zur Bilddatenverarbeitung auf der Computerverarbeitungseinheit (8) oder der digitalen Visualisierungsvorrichtung (4) abläuft.

10. System zum selektiven Spritzen nach den Ansprüchen 6 bis 9, wobei der vorbestimmte Bereich (9) von Baumkronen in der Blütezeit ein Bereich ist, der von der Kamera (5) der digitalen Visualisierungsvorrichtung (4) von der Seite erfasst wird, während sich die Kamera (5) entlang eines Abstands zwischen geraden Reihen von Obstbäumen bewegt, wobei der Bereich (9) die Baumkrone eines einzelnen Baums oder einen Streifen mit einer bestimmten Breite entlang der gesamten Höhe der Baumkrone umfasst, wobei der Streifen schmaler oder breiter als die Baumkrone eines individuellen Baums ist.

11. System zum selektiven Spritzen nach den Ansprüchen 6 bis 10, wobei die Computerverarbeitungseinheit (8) auf dem Traktor oder separat angeordnet ist und die Informationen über eine drahtgebundene oder drahtlose Verbindung empfängt und überträgt.

## Revendications

1. Procédé de pulvérisation sélective d'arbres fruitiers, adapté au niveau de charge des arbres fruitiers dans un verger, lorsqu'un pulvérisateur passe à travers le verger, le procédé comprenant les étapes suivantes :
A) la capture électronique d'une image pour chaque zone de canopées prédéterminée (9) pendant la floraison par un dispositif de visualisation numérique (4), la caméra numérique (5), utilisant de l'électronique, projetant l'image de la zone (9) sur un capteur photosensible de la caméra (5) déterminant l'abondance d'ensembles de fleurs dans une zone individuelle (9) et déterminant simultanément l'emplacement géographique exact de chaque zone (9) à l'aide d'un dispositif (7) déterminant l'emplacement géographique précis du pulvérisateur (1) ;
B) la détermination du nombre d'inflorescences dans chaque zone individuelle (9) et la catégorisation de chaque zone (9) en fonction du nombre d'inflorescences dans l'une des classes quantitatives prédéterminées d'abondance d'ensembles de fleurs avec un module logiciel pour le traitement de données d'images à l'aide d'un algorithme de segmentation et de classification ou d'un autre algorithme de traitement d'image, les classes quantitatives prédéterminées d'abondance d'ensembles de fleurs étant numérotées de n = 1 à N, la première classe n = 1 représentant le nombre le plus bas d'inflorescences par zone (9), la dernière classe n = N représentant le nombre le plus élevé d'inflorescences dans la zone (9) et chaque classe intermédiaire 1 < n < N représentant un nombre supérieur d'inflorescences dans la zone (9) que la classe précédente, et le stockage des données de classe de chaque zone (9) conjointement avec l'emplacement géographique associé dans une base de données dans une unité de traitement informatique (8) ;
C) la pulvérisation sélective d'arbres fruitiers dans le verger en fonction de la position dans le verger, l'unité de traitement informatique (8), sur la base des données sur l'abondance d'ensembles de fleurs de chaque zone (9) conjointement avec l'emplacement géographique associé de la zone (9), stockée dans la base de données, en fonction de l'emplacement géographique du pulvérisateur (1) dans le verger et en fonction du programme de pulvérisation sélectionné, utilise un logiciel pour prendre des décisions et actionne des buses (2) commandées par des électrovannes (3) pour distribuer la quantité de l'agent de pulvérisation à pulvériser sur une seule zone de canopées (9) à un emplacement géographique spécifique.

2. Procédé selon la revendication 1, dans lequel la zone prédéterminée (9) des canopées dans la période de floraison est une zone capturée par la caméra (5) du dispositif de visualisation numérique (4) depuis un côté lorsque la caméra (5) se déplace le long d'un espacement entre des rangs droits d'arbres fruitiers, ladite zone (9) comprenant la canopée d'un arbre individuel ou une bande d'une certaine largeur sur toute la hauteur de la canopée, ladite bande étant plus étroite ou plus large que la canopée d'un arbre individuel.

3. Procédé selon les revendications 1 et 2, dans lequel le module logiciel pour le traitement de données d'images s'exécute sur l'unité de traitement informatique (8), les images du dispositif de visualisation numérique (4) étant directement transmises à la mémoire de l'unité de traitement informatique (8) et le module logiciel compte le nombre d'inflorescences dans la zone (9) pour chaque image pour chaque zone individuelle (9) à partir de la mémoire et catégorise chaque zone (9) en une classe d'abondance d'ensembles de fleurs, et les informations sur la catégorisation de la zone (9) dans une classe sont entrées dans la base de données sur l'unité de traitement informatique (8) conjointement avec l'emplacement géographique précis associé de la zone (9) transmise à l'unité de traitement informatique (8) à partir du dispositif (7) pour déterminer l'emplacement géographique précis de la zone (9).

4. Procédé selon les revendications 1 et 2, dans lequel le module logiciel pour le traitement de données d'image s'exécute sur le dispositif de visualisation numérique (4), le dispositif de visualisation numérique (4) transmettant à l'unité de traitement informatique (8) les informations concernant la catégorisation de la zone (9) en une classe, l'emplacement géographique associé de la zone (9) étant transmis à l'unité de traitement informatique (8) à partir du dispositif (7) pour déterminer l'emplacement géographique précis de la zone (9), et l'unité de traitement informatique (8) entrant à la fois des informations dans la base de données sur l'unité de traitement informatique (8).

5. Procédé selon les revendications 1 à 4, dans lequel les étapes A et B sont effectuées pendant le premier passage du pulvérisateur (1) à travers le verger, et l'étape C pendant le deuxième et tous les passages suivants du pulvérisateur (1) à travers le verger.

6. Système de pulvérisation sélective adapté au niveau de charge des arbres fruitiers dans un verger, le système comprenant un tracteur pourvu d'un pulvérisateur de verger à air monté sur tracteur classique (1) qui comprend des buses de pulvérisation (2) commandées par des électrovannes (3) et d'autres éléments standard requis pour le fonctionnement du pulvérisateur (1) tel qu'un ventilateur, une pompe, un réservoir d'agent de pulvérisation avec un récipient de rinçage et un tuyau de mélange, et le système comprenant en outre :
- un dispositif de visualisation numérique (4) capturant une image d'une zone prédéterminée (9) de canopées dans une période de floraison, le dispositif de visualisation numérique (4) comprenant une caméra numérique (5) avec des composants électroniques, projetant des images de la zone (9) à travers des lentilles sur un capteur photosensible de la caméra (5);
- un dispositif (7) de détermination de l'emplacement géographique précis du pulvérisateur (1) pour une détermination respective de l'emplacement du pulvérisateur (1) dans un rang dans le verger;
- un module logiciel de traitement de données d'image déterminant l'abondance d'inflorescences qui, pour chaque image capturée de la zone (9), en fonction de l'emplacement géographique associé de la zone (9), détermine le nombre d'inflorescences dans chaque zone individuelle (9) et catégorise chaque zone (9) dans l'une des classes prédéfinies d'abondance d'ensembles de fleurs en fonction du nombre quantitatif prédéterminé d'inflorescences, les classes quantitatives prédéterminées d'abondance d'ensembles de fleurs étant numérotées de n = 1 à N, la première classe n = 1 représentant le nombre le plus bas d'inflorescences par zone (9), la dernière classe n = N représentant le nombre le plus élevé d'inflorescences dans la zone (9) et chaque classe intermédiaire 1 < n < N représentant un nombre supérieur d'inflorescences dans la zone (9) que la classe précédente, et
- une unité de traitement informatique (8) comprenant au moins des entrées pour une communication avec le dispositif de visualisation numérique (4) et le dispositif (7) déterminant l'emplacement géographique précis, une mémoire, une base de données, un logiciel de prise de décision, et une partie de sortie pour communiquer avec les buses de pulvérisation (2), l'unité de traitement informatique (8), sur la base des données sur la classe d'abondance d'ensembles de fleurs de chaque zone (9) conjointement avec l'emplacement géographique associé de la zone (9), stockée dans la base de données, en fonction de l'emplacement géographique du pulvérisateur (1) dans le verger et en fonction du programme de pulvérisation sélectionné, utilise un logiciel pour prendre des décisions et actionne des buses (2) commandées par des électrovannes (3) pour distribuer la quantité de l'agent de pulvérisation à pulvériser sur une seule zone (9).

7. Système de pulvérisation sélective selon la revendication 6, dans lequel le dispositif de visualisation numérique (4) est en outre équipé d'une unité d'éclairage (6) capable d'un éclairage continu, par exemple par une DEL, par fluorescence, halogène ou éclairage classique.

8. Système de pulvérisation sélective selon la revendication 6, dans lequel le dispositif (7) pour déterminer l'emplacement géographique précis comprend des systèmes de positionnement, choisis parmi un GPS différentiel, une cinématique en temps réel GPS et un GPS différentiel avec une cinématique en temps réel avec un récepteur à fréquence unique ou à double fréquence, ou des systèmes de positionnement local choisis parmi un module émetteur-récepteur sans fil et une identification par radiofréquence.

9. Système de pulvérisation sélective selon la revendication 6, dans lequel le module logiciel pour le traitement de données d'images s'exécute sur l'unité de traitement informatique (8) ou le dispositif de visualisation numérique (4).

10. Système de pulvérisation sélective selon les revendications 6 à 9, dans lequel la zone prédéterminée (9) des canopées dans la période de floraison est une zone capturée par la caméra (5) du dispositif de visualisation numérique (4) depuis un côté lorsque la caméra (5) se déplace le long d'un espace entre des rangs droits d'arbres fruitiers, ladite zone (9) comprenant la canopée d'un arbre individuel ou une bande d'une certaine largeur sur toute la hauteur de la canopée, ladite bande étant plus étroite ou plus large que la canopée d'un arbre individuel.

11. Système de pulvérisation sélective selon les revendications 6 à 10, dans lequel l'unité de traitement informatique (8) est située sur le tracteur ou séparément et reçoit et transmet les informations par l'intermédiaire d'une connexion filaire ou sans fil.
